Europäisches Patentamt

European Patent Office

Office européen des brevets

(11) Veröffentlichungsnummer: **0 296 583 B1**

## (12) EUROPÄISCHE PATENTSCHRIFT

(45) Veröffentlichungstag der Patentschrift: **02.09.92**

(21) Anmeldenummer: **88110017.6**

(22) Anmeldetag: **23.06.88**

(51) Int. Cl.⁵: **G01F 23/28**, G01S 15/36

(54) Füllstandsmessgerät mit Ultraschallwandler.

(30) Priorität: **26.06.87 DE 3721212**

(43) Veröffentlichungstag der Anmeldung:
**28.12.88 Patentblatt 88/52**

(45) Bekanntmachung des Hinweises auf die
Patenterteilung:
**02.09.92 Patentblatt 92/36**

(84) Benannte Vertragsstaaten:
**AT CH DE FR GB IT LI NL SE**

(56) Entgegenhaltungen:
**DE-A- 2 611 758**
**US-A- 4 299 114**
**US-A- 4 386 409**

(73) Patentinhaber: **VEGA Grieshaber GmbH & Co.**

**W-7620 Wolfach(DE)**

(72) Erfinder: **Wöhrle, Albert**
**Alpirsbacherstrasse 6**
**W-7234 Rötenberg(DE)**
Erfinder: **Storz, Bernhard**
**Am Buck 197a**
**W-7611 Gutach/Schw.(DE)**
Erfinder: **Fehrenbach, Josef**
**Schlattstrasse 1**
**W-7612 Haslach(DE)**

(74) Vertreter: **Strasse, Joachim, Dipl.-Ing. et al**
**Strasse & Maiwald Patentanwälte Balan-**
**strasse 55**
**W-8000 München 90(DE)**

Rank Xerox (UK) Business Services

## Beschreibung

Die Erfindung bezieht sich auf ein Füllstandsmeßgerät, das mit einem Ultraschallwandler ausgestattet ist, der aufgrund empfangener Echosignale elektrische Signale erzeugt, die über eine Filtervorrichtung einer Empfängerschaltung zugeführt werden.

Schall- bzw. Ultraschall-Abstandsmeßgeräte für die Füllstandsmessung benutzen Schallwandler, vorzugsweise piezoelektrische Scheiben, sowohl zur Erzeugung der Schallimpulse als auch zum Empfang der zu messenden Echos. Um die zugeführte elektrische Leistung und die abgestrahlte Schalleistung optimal aneinander anzupassen und auch die Bedingungen für die Rückwandlung des empfangenen Echosignales in ein elektrisches Signal zu optimieren, werden die Wandler auf ihrer Eigenresonanzfrequenz betrieben. Diese Eigenresonanzfrequenz ist z.B. bei Piezoscheiben von Materialkonstanten und auch von Eigenschaften der das eigentliche Wandlerelement umgebenden mechanischen Anpaßelemente bestimmt. Durch Temperaturänderungen und Änderungen in den mechanischen Verhältnissen, z. B. durch Anhaften von irgendwelchen Materialien, ergeben sich zwangsläufig Änderungen in der Resonanzfrequenz. Für die Senderseite sind verschiedene Wege denkbar, um die Erregerfrequenz der momentanen Eigenresonanzfrequenz anzupassen und damit die Erzeugung der Schallimpulse zu optimieren, wobei dann die Arbeitsfrequenz der elektronischen Schaltung entsprechend veränderbar ist.

Die Empfängerelektronik eines solchen Gerätes benötigt zur Erzielung einer maximalen Empfangssensibilität sowie Unempfindlichkeit gegen Störgeräusche eine schmalbandige Filtereinrichtung. Da sich die Arbeitsfrequenz, wie oben erwähnt, während des Betriebes ändern kann, ist es notwendig, die vorgeschalteten Filter der Empfängerseite synchron mitzuverstimmen. Somit wird ein schmalbandiges Filter benötigt, dessen Mittenfrequenz stets der Arbeitsfrequenz entspricht, aber ohne daß sich dabei die Bandbreite verändert. Bekannte analoge Filter, deren Mittenfrequenz verstellbar ist, verändern oft auch die Bandbreite. Außerdem ist die Filtercharakteristik den Toleranzen der Bauteile sowie dem Temperaturverhalten unterworfen.

Der Erfindung liegt deshalb die Aufgabe zugrunde, für die Empfängerseite eines Füllstandsmeßgerätes eine Filtervorrichtung zu schaffen, die bei jedem Meßvorgang im optimalen Frequenzbereich arbeitet, und deren Mittenfrequenz der jeweiligen Arbeitsfrequenz entspricht, wobei die an sich erforderliche schmale Bandbreite beibehalten und Toleranzprobleme aufgrund der Fertigungsbedingungen oder Temperatureinflüsse vermieden werden sollen.

Zur Lösung dieser Aufgabe wird das gattungsgemäße Füllstandsmeßgerät mit einer Filtervorrichtung versehen, die eine Mehrzahl parallel geschalteter, phasenselektiver Gleichrichter aufweist, deren Ausgänge an einen der Empfängerschaltung vorgeschalteten Maximum-Selektor angeschlossen sind.

Die Erfindung benutzt demnach eine Reihe von phasenselektiven Gleichrichtern, von denen jeder ein extrem schmales Filter darstellt. Bei einem solchen Gleichrichter wird die Steuerfrequenz extern zugeführt und ist somit leicht veränderlich; allerdings erzeugt diese Schaltung nur bei Übereinstimmung der Frequenz und Phasenlage zwischen Steuer- und Meßsignal ihr größtes Ausgangssignal. Bei einer Schall-/bzw. Ultraschall-Entfernungsmessung ist die genaue Frequenz des Empfangssignals bekannt, da sie der Sendefrequenz entspricht. Die Phasenlage ist jedoch von der Laufzeit des Echoimpulses abhängig und kann jede Position einnehmen. Ein einzelner, festeingestellter phasenselekiver Gleichrichter würde daher nur dann ein optimales Nutzsignal abgeben, wenn die Phase des empfangenen Echos nur verhältnismäßig wenig von der Phase seines Steuersignales abweicht.

Bei der Erfindung werden deshalb mehrere solcher phasenselektiver Gleichrichter eingangsseitig parallel geschaltet, und diese Gleichrichter werden mit der gleichen Steuerfrequenz, aber mit unterschiedlichen, um gleiche Beträge versetzten Phasen angesteuert. Dadurch erzeugt das Echosignal stets an einem oder zwei dieser Gleichrichter ein optimales Nutzsignal. Eine anschließende analoge Vergleichsschaltung wählt jeweils den Gleichrichter mit dem größten Nutzsignal aus und schaltet dessen Signal zur Verarbeitung und Auswertung weiter. Die Steuerfrequenz ist dabei synchron zur Sendefrequenz.

Diese Schaltungsanordnung kann alle praktisch auftretenden Echo-Phasenbedingungen optimal verarbeiten. Sie genügt den hohen Anforderungen in Bezug auf kurzzeitiges Ein- und Ausschwingverhalten, und ihre Bandbreite wird bei Steuerfrequenzänderungen nicht beeinflußt.

Ein phasenselektiver Gleichrichter gibt bei Übereinstimmung der Phasen von Meß- und Steuersignal ein positives Maximum und bei einem Versatz der Phasen um 180° ein negatives Maximum. Eine weitere Verbesserung der Erfindung sieht nun vor, zur Verringerung des Aufwandes an Bauteilen die Schaltung so zu gestalten, daß sowohl die positiven als auch die invertierten negativen Ausgangssignale jedes phasenselektiven Gleichrichters verwertet werden. Zu diesem Zweck werden im Ausgang jedes phasenselektiven Gleichrichters zwei antivalent gepolte Zusatzgleichrichter angeordnet und eine der beiden Signalpolaritäten umgekehrt. Durch Ausnutzen beider Maxima kann somit jeder phasenselektive Gleichrichter doppelt genutzt werden, so daß z.B. in der vorstehend beschriebenen Schaltungsanordnung zehn parallel geschaltete, phasenselektive Gleichrichter über die Gesamtperiode hinweg nicht 36°, sondern 18° Auflösung ergeben.

Weitere Merkmale und Vorteile der Erfindung ergeben sich aus der nachfolgenden Beschreibung eines Ausführungsbeispiels und der Zeichnung.

Es zeigen:

Fig. 1   ein Blockdiagramm eines Füllstandsmeßgerätes,

Fig. 2   ein Blockdiagramm der in dem Gerät der Fig. 1 verwendeten Filtervorrichtung und

Fig. 3   eine weitere Verbesserung der Filtervorrichtung der Fig. 2.

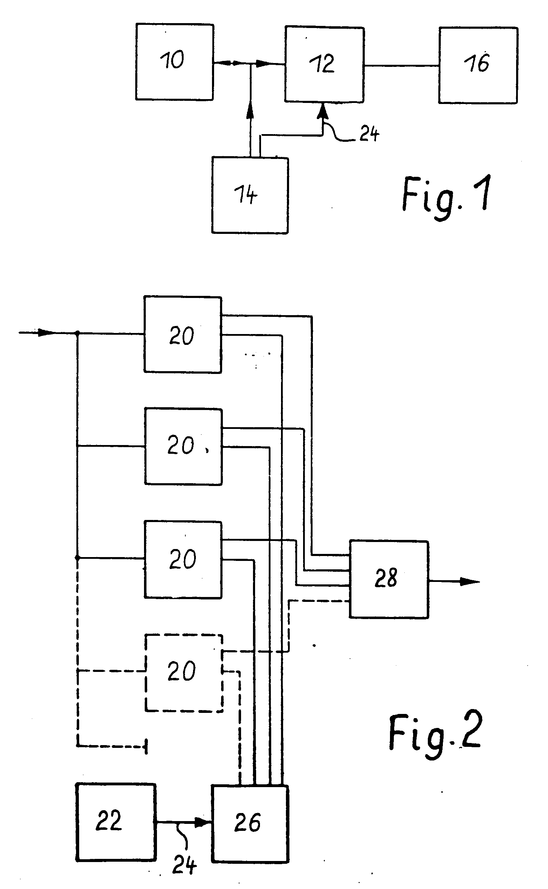

In der Fig. 1, die den grundsätzlichen Aufbau eines Füllstandsmeßgerätes vereinfacht wiedergibt, bezeichnet der Block 10 den Ultraschallwandler, der einerseits mit einer Erreger- oder Senderschaltung 14, andererseits über ein schmalbandiges Filter 12 mit einer Empfänger-oder Auswertungsschaltung 16 verbunden ist.

Die Filtervorrichtung 12 ist in Fig. 2 im einzelnen dargestellt. Sie weist eine Mehrzahl von phasenselektiven Gleichrichtern 20 auf, deren Eingänge parallel an den Ausgang des empfangenen Ultraschallwandlers 10 angeschlossen sind. Die einzelnen phasenselektiven Gleichrichter werden mit einer für alle Gleichrichter gleichen Steuerfrequenz angesteuert, die aber jeweils um gleiche Beträge versetzte Phasenverschiebungen aufweist, derart, daß die Gruppe der Gleichrichter die Gesamtperiode gleichmäßig überdeckt. Zu diesem Zweck ist ein Mutterfrequenzoszillator 22 über eine Leitung 24 mit einer Steuerfrequenzverteilung 26 verbunden, vor der aus die der Reihe der Phasenverschiebungen entsprechenden Steuerleitungen nach den einzelnen Gleichrichtern 20 gehen. Der Mutterfrequenzoszillator 22 ist Teil der Senderschaltung 14, wie durch die in Fig. 1 dargestellte Leitung 24 hervorgehoben wird. Ein Maximumselektor 28, der als analoge Vergleichsschaltung ausgebildet ist, ist mit den Ausgängen der Gleichrichter 20 verbunden, so daß von dieser Vergleichsschaltung jeweils der Gleichrichter 20 mit dem größten Nutzsignal ausgewählt und das Signal zur Verarbeitung in der an den Maximumselektor 28 anschließenden Empfängerschaltung 16 weitergeleitet wird.

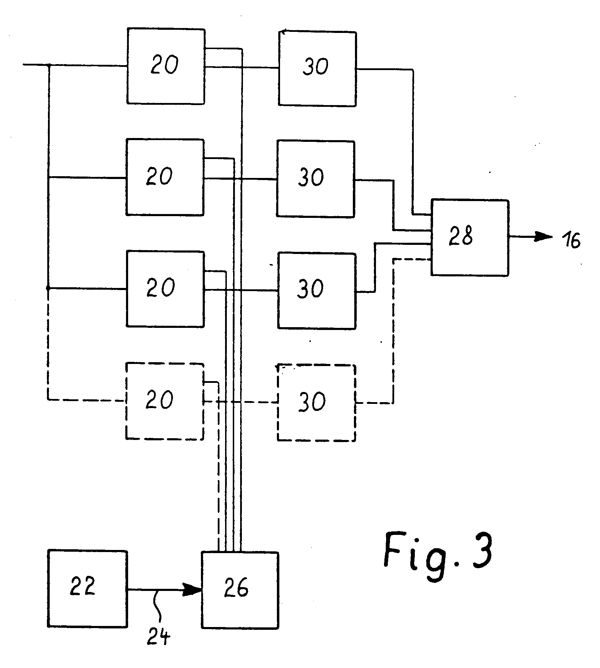

Die Fig. 3 zeigt eine weitere Ausgestaltung, bei der zwischen jedem phasenselektiven Gleichrichtung 20 und dem Maximumselektor 28 ein Zweiweggleichrichter 30 liegt, der auch die Form von zwei antivalent gepolten, parallel liegenden Gleichrichtern haben kann. Damit können an jedem der phasenselektiven Gleichrichter 20 das positive und auch das invertierte negative Ausgangssignal verwertet werden. Bei jedem Gleichrichter 20 werden somit beide Maxima genutzt. Bei gleicher Zahl von Gleichrichtern 20 wird dadurch die Gesamtauflösung um den Faktor 2 verbessert.

Der Mutteroszillator 22 erzeugt vorzugsweise ein ganzzahliges Vielfaches der Arbeitsfrequenz, wobei die Steuerfrequenzverteilung 26 als Schieberegister ausgebildet ist und das Vielfache der Anzahl der Gleichrichter 20 entspricht. Es ergibt sich dadurch eine Filtervorrichtung, deren Mittelfrequenz mit einer Steuerfrequenz eingestellt wird, die ein der Gleichrichterzahl entsprechendes Vielfaches der Mittelfrequenz beträgt. Für die Auswertung une Füllstandsbestimmung kann dadurch ein wesentlich prägnanteres Signal benutzt und die Zuverlässigkeit der Messung entsprechend gesteigert werden.

**Patentansprüche**

1.  Füllstandsmeßgerät mit einem Ultraschallwandler, der aufgrund empfangener Echosignale elektrische Signale erzeugt, die über eine Fil-tervorrichtung einer Empfängerschaltung zuge-führt werden,
    **dadurch gekennzeichnet**,
    daß die Filtervorrichtung (12) eine Mehrzahl parallel geschalteter, phasenselektiver Gleichrichter (20) aufweist, deren Ausgänge an einen der Empfängerschaltung (16) vorgeschalteten Maximum-Selektor (28) angeschlossen sind.

2.  Füllstandsmeßgerät nach Anspruch 1,
    **dadurch gekennzeichnet**,
    daß im Ausgang jedes phasenselektiven Gleichrichters (20) zwei antivalent gepolte Zusatzgleichrichter (30) liegen.

3.  Füllstandsmeßgerät nach Anspruch 1 oder 2,
    **dadurch gekennzeichnet**,
    daß die die Filtervorrichtung (12) steuernde Frequenz zur Arbeitsfrequenz des Füllstandsmeßgerätes synchron ist.

4.  Füllstandsmeßgerät nach Anspruch 3,
    **dadurch gekennzeichnet**,
    daß die die Filtervorrichtung (12) steuernde Frequenz von dem die Arbeitsfrequenz bestimmenden Mutteroszillator (22) abgeleitet ist.

5.  Füllstandsmeßgerät nach Anspruch 4,
    **dadurch gekennzeichnet**,
    daß die Aufteilung des Oszillatorsignals zu den einzelnen phasenselektiven Gleichrichtern (30) mittels Schieberegistern (26) erfolgt, wobei die Frequenz des Mutteroszillators (22) vorzugsweise ein ganzzahliges Vielfaches des Arbeitsfrequenz ist.

## Claims

1. Filling level measuring device with an ultrasonic transducer, said transducer generating - in response to echo signals received - electrical signals which are transmitted to a receiver circuit via filter means,
**characterized in**
that the filter means (12) has a plurality of phase-selective rectifiers (20) connected in parallel, the outputs of which are connected to a maximum signal selector (28) preceding the receiver circuit (16).

2. Filling level measuring device according to claim 1,
**characterized in**
that there are two additional rectifiers (30) of antivalent polarity in the output of each phase-selective rectifier (20).

3. Filling level measuring device according to claim 1 or 2,
**characterized in**
that the frequency controlling the filter means (12) is synchronous with the operating frequency of the filling level measuring device.

4. Filling level measuring device according to claim 3,
**characterized in**
that the frequency controlling the filter means (12) is derived from the master oscillator (22) determining the operating frequency.

5. Filling level measuring device according to claim 4,
**characterized in**
that division of the oscillator signal to the individual phase-selective rectifiers (30) is carried out by means of shift registers (26), the frequency of the master oscillator (22) preferably being an integral multiple of the operating frequency.

## Revendications

1. Appareil de mesure du niveau de remplissage avec un transducteur ultrasonore, ledit transducteur produisant en réaction à des signaux d'écho reçus des signaux électriques qui sont appliqués à un circuit de réception moyennant un dispositif de filtre
**caractérisé par**
le fait que le dispositif de filtre (12) comprend plusieurs redresseurs sélectifs de phase (20) mis en parallèle dont les sorties sont connectées à un sélecteur de maximum (28) qui précède le circuit de réception (16).

2. Appareil de mesure du niveau de remplissage selon la revendication 1,
**caractérisé par**
le fait que dans la sortie de chaque redresseur sélectif de phase (20) se trouvent deux redresseurs additionnels (30) de polarisation antivalente.

3. Appareil de mesure du niveau de remplissage selon la revendication 1 ou 2,
**caractérisé par**
le fait que la fréquence pour commander le dispositif de filtre (12) est synchrone à la fréquence d'opération de l'appareil de mesure du niveau de remplissage.

4. Appareil de mesure du niveau de remplissage selon la revendication 3,
**caractérisé par**
le fait que la fréquence pour commander le dispositif de filtre (12) est dérivée du maître-oscillateur (22) qui détermine la fréquence d'opération.

5. Appareil de mesure du niveau de remplissage selon la revendication 4,
**caractérisé par**
le fait que la répartition du signal de l'oscillateur aux redresseurs (30) sélectifs de phase individuels s'effectue moyennant des registres à décalage (26), la fréquence du maître-oscillateur (22) préféramment étant un multiple entier de la fréquence d'opération.

Fig. 1

Fig. 2

Fig. 3